# EUROPEAN PATENT APPLICATION

(11) **EP 1 832 867 A1**
(43) Date of publication of application: **12.09.2007**
(21) Application number: 07004694.1
(22) Date of filing: 07.03.2007
(51) Int. Cl.: G01N 21/88, G01N 21/57, G01N 21/84, G01B 11/24

(54) **Defect inspection apparatus and defect inspection method**

(30) Priority: 10.03.2006 JP 2006065980
(71) Applicant: OMRON CORPORATION, Kyoto-shi, Kyoto 600-8530 (JP)
(72) Inventor: Okabe, Hiroshi, Shimogyo-ku Kyoto-shi Kyoto 600-8530 (JP); Kanetani, Yoshihiro, Shimogyo-ku Kyoto-shi Kyoto 600-8530 (JP); Matsumoto, Toshihiko, Shimogyo-ku Kyoto-shi Kyoto 600-8530 (JP)
(74) Representative: Kilian, Helmut

(57) **Abstract**

Light sources emit irradiation lights respectively, so that edge parts of mutual irradiation areas (inspection areas) are superposed one another. The imaging apparatus receives regular reflection lights and generates two images corresponding to each of the light sources. A main control part combines two images and determines presence/absence of a defect. By irradiating an inspected surface A with the irradiation lights from mutually different directions, a position of an area showing the defect in each image is slightly deviated. Therefore, even if a dimension of an area showing the defect is small in each image, by superposing two images one another, the dimension of the area showing a defect part becomes large in the image after composition. Thus, an accuracy of defect detection on the edge part of the inspection area can be improved.

## Description

### BACKGROUND OF THE INVENTION

### 1. Field of the Invention

The present invention relates to a technique of inspecting whether or not a defect is produced on a surface of a work, and particularly relates to a technique of inspecting in the vicinity of an edge part of an inspection area.

### 2. Description of the related art

In recent years, a case of a cellular phone and a home electric appliance, etc, having a structure that a coating layer is formed by a transparent resin on the surface of a main body, has been used. In such a case, the main body part is generally formed by resin, etc, and is colored in a predetermined color. By forming the aforementioned coating layer on the surface of this main body part, gloss and a change of color are generated on the surface, and a commodity value is thereby improved.

In a plant where a molding body having the aforementioned coating layer is manufactured, whether or not irregularity is generated on the surface of the coating layer is inspected. A visual observation for defect inspection by a worker of a job site has been conventionally performed. However, along with a diversification and a mass-production of a product using this type of case, a load of a worker is increased, and time required for the inspection is also enormous. Therefore, in order to solve such problems, an attempt is made to automatically perform a defect inspection.

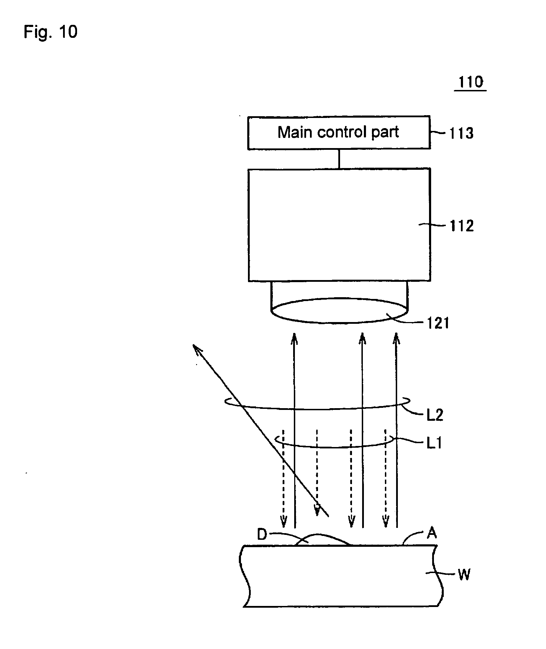

FIG.10 shows a schematic view of a structure of a conventional defect inspection apparatus.
In FIG.10, a defect inspection apparatus 110 includes an imaging apparatus 112, a main control part 113, and a light source not shown. The light source emits irradiation light L1 toward an inspected surface A of a work W. The irradiation light L1 is regularly reflected on the inspected surface A of the work W. Thus, a regular reflection light L2 is generated. Note that a "regular reflection" refers to a phenomenon that light is reflected at an angle equal to an incident angle.

The work W is an inspection object having gloss, and for example, is a metal or a resin, etc, formed with a layer of a transparent material on the surface. Generally, a level of the gloss on the surface of an object is determined by the level of a regular reflection light component. Namely, "the work W has gloss" means "the light is reflected regularly on the surface of the work W".

An arrangement of the light source not shown, the imaging apparatus 112, and the work W are previously adjusted so that the imaging apparatus 112 can receive a regular reflection light L2. The regular reflection light L2 is collected once by a lens 121. The imaging element provided inside of the imaging apparatus 112 receives the regular reflection light thus collected and generates image data.

Here, when a normal part out of the inspected surface A is irradiated with the irradiation light L1, the regular reflection light L2 from the normal part is incident on the lens 121. However, the regular reflection light L2 reflected regularly on a defect D is not incident on the lens 121. Accordingly, in an image imaged by the imaging apparatus 112, an area corresponding to the defect D is darker than the area corresponding to the normal part.

The aforementioned principle is established even when the defect D of FIG.10 is a recessed defect. Therefore, the area corresponding to the recessed defect is darker than its peripheral part on an image. In this way, by using a lightness difference on the image, presence or absence of irregularity defects on the inspected surface can be automatically inspected.

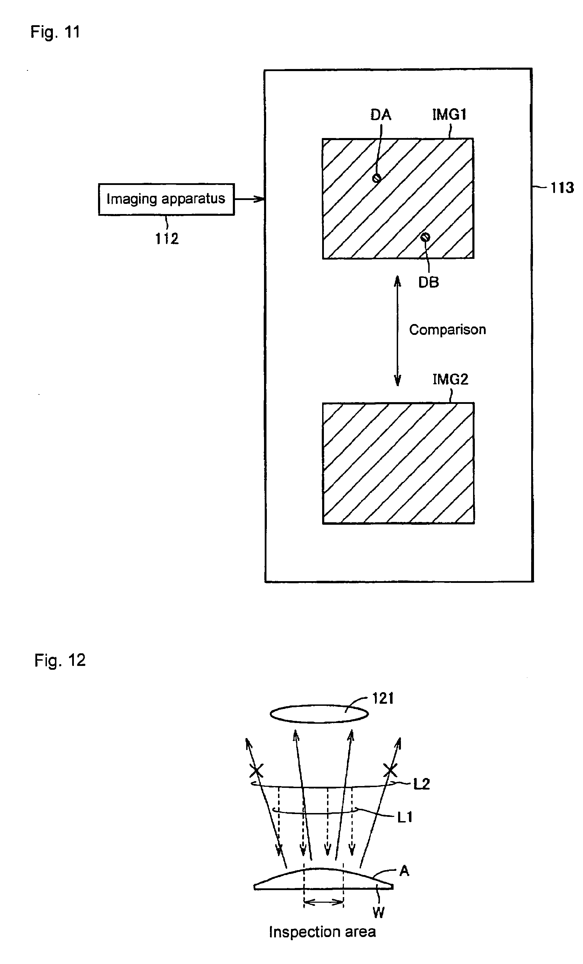

FIG.11 schematically shows a view of the inspection of the irregularity defects by the main control part 113 of FIG.10.
In FIG.11, the main control part 113 receives an inspection image IMG1 from the imaging apparatus 112. The main control part 113 compares the inspection image IMG1 and a previously stored model image IMG2. The inspection image IMG1 includes defect areas DA and DB having lightness difference from the peripheral part (namely, darker than the peripheral part). The model image IMG2 is the image obtained by previously imaging the inspected surface without the irregularity defects by the imaging apparatus 112. Therefore, no area causing the lightness difference from the peripheral part exists in the model image IMG2. The main control part 113 compares the inspection image IMG1 and the model image IMG2. The main control part 113 determines that the defect exists on the inspected surface A of FIG.10, by an existence of the defect areas DA and DB.

Generally, the surface of the work is a curved surface in many cases. When a method as shown in FIG.10 and FIG.11 is simply applied to the defect inspection on the curved surface, the problem arises as will be described hereafter.

FIG.12 shows a view explaining the problem generated in the inspection by the defect inspection apparatus 110 of FIG.10, when the inspected surface is the curved surface.

In FIG.12, the inspected surface A is the curved surface, and therefore a part (inclined part), into which the irradiation light L1 is made incident, exists on the inspected surface A. The regular reflection light L2 from this inclined part does not enter the lens 121. Therefore, when the inspected surface A is the curved surface, the inspection area becomes narrower than a case of a flat surface.

Two examples are shown hereunder, out of the conventional methods of solving such a problem.
FIG.13 shows a view explaining the method capable of securing a wide inspection area when the inspected surface is the curved surface.

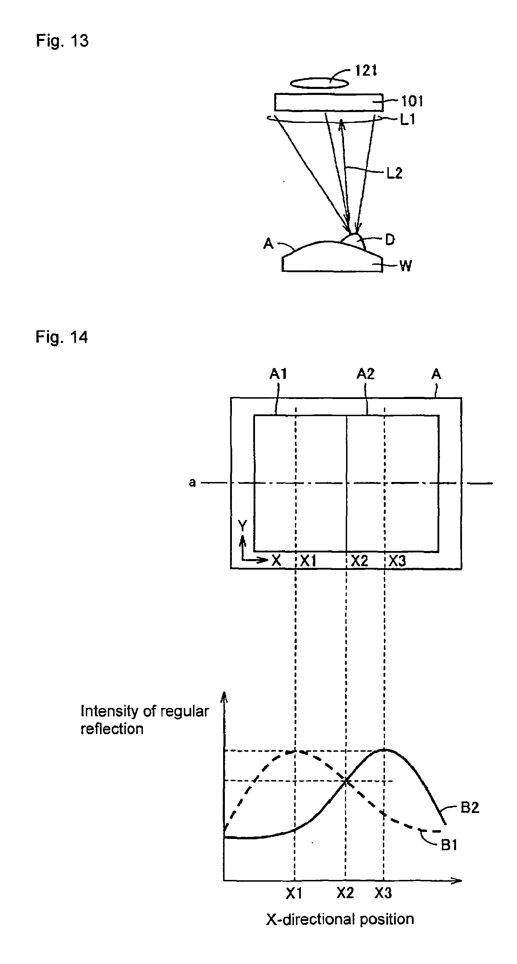

In FIG.13, the light source 101 is set so that its irradiation surface becomes larger as much as possible (for example, larger than the surface of the lens 121), to secure an appropriate sized inspection area. By increasing a light-emitting area of the light source 101, the inspection area, namely, the irradiation area can be made larger on the inspected surface A. When the light source 101 is a light emitting element such as an LED (Light Emitting Diode), the light emitting area can be increased by increasing the number of light emitting elements.

However, in a case of the method as shown in FIG.13, the irradiation light L1 is made incident on the defect D from various directions. Thus, there is a possibility that the regular reflection light L2 from the defect D is partially incident on the lens 121. Such a light is called "noise light" hereafter.

When the noise light enters the imaging apparatus, the lightness difference between the normal part and a defect part becomes small on the inspection image. Namely, when the inspected surface is the curved surface, a problem involved therein is that a detection accuracy of the defect is deteriorated when the light source is made large to widen the inspection area.

Japanese Patent Application Laid-Open NO.11-23243 discloses an example of the inspection apparatus capable of solving the problem as shown in FIG.13. In this inspection apparatus, a plurality of light sources capable of adjusting an intensity of light is used.

In the aforementioned inspection apparatus, first, an optical axis angle of the light source and the intensity of light are adjusted based on a previously detected curvature of the surface. Next, the inspection apparatus causes a plurality of light sources to emit light sequentially, and performs defect inspection for the inspection area corresponding to each light source. By performing the defect inspection of a plurality of areas irradiated with the light emitted from the plurality of light sources, the aforementioned inspection apparatus can widen the inspection area. In addition, by differentiating a light emitting timing, generation of the noise light can be prevented.

FIG.14 shows a view explaining the problem of the inspection method disclosed in Japanese Patent Application Laid-Open NO.11-23243.

In FIG.14, irradiation areas A1 and A2 on the inspected surface A are the areas irradiated with the light from two light sources not shown. The irradiation areas A1 and A2 are provided, so that edge parts of them are brought into contact with each other at X-axial position X2. X-axial position X1 and X-axial position X3 show the position of a center part of the irradiation areas A1 and A2, respectively.

In a graph of FIG.14, the horizontal axis shows the position on the axis "a" parallel to the X-axis, and the vertical axis shows the intensity of the regular reflection light which is made incident on the imaging apparatus. A curve B1 in the graph shows a change of the intensity of the regular reflection light that is made incident on the imaging apparatus from the light source for emitting the light to the irradiation area A1, and a curve B2 of the graph shows the change of the intensity of the regular reflection light that is made incident on the imaging apparatus from the light source for emitting the light to the irradiation area A2. In both of the inspection areas, the intensity of the regular reflection light that is made incident on the imaging apparatus is more decreased on the edge part than in the center portion.

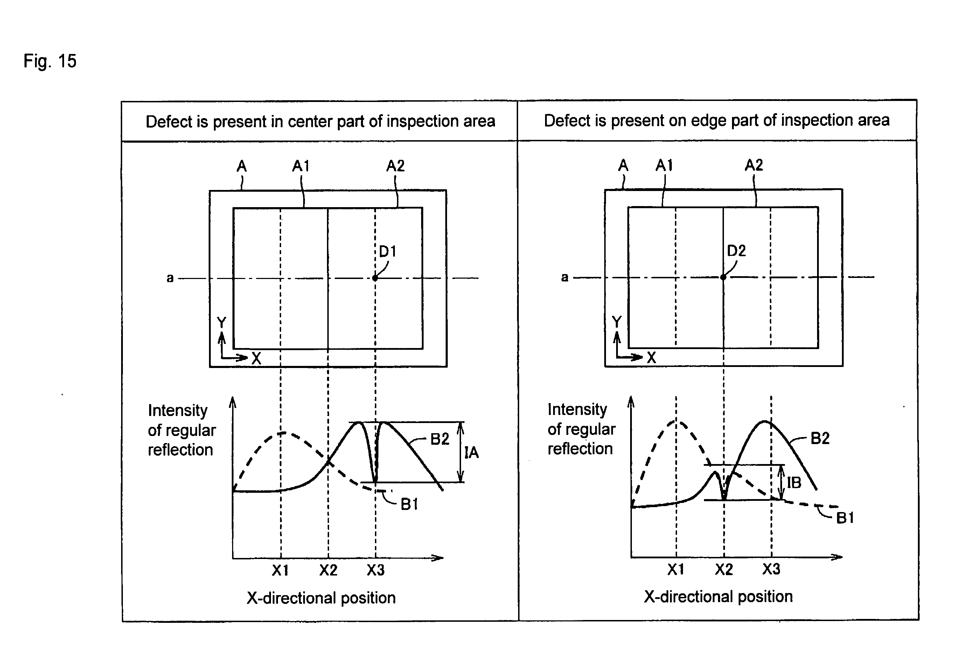

FIG.15 shows a view explaining the defect detection on the edge part of the inspection area.
In FIG.15, when the defect exists at the position X3, being the center portion of the inspection area, the intensity of the regular reflection light that is made incident on the imaging apparatus is decreased only by IA. In the center portion of the inspection area, the intensity of the regular reflection light is large, and therefore an intensity difference IA is also large. Therefore, in the center portion, the detection accuracy of the defect is high.

Meanwhile, at the position X2, being the edge part of the inspection area, the intensity itself of the regular reflection light made incident on the imaging apparatus is small. By an existence of the defect D2 at the position X2, the intensity of the regular reflection light made incident on the imaging apparatus is changed by IB. However, intensity difference IB is smaller than the intensity difference IA. This shows that the lightness difference caused by the irregularity defects is smaller on the edge part than in the center portion. Thus, the accuracy of the defect detection on the edge part of the inspection area is more decreased than that in the center portion of the inspection area.

Even when the inspected surface of the work is the flat surface, the detection accuracy of the defect is decreased on the edge part of the inspection area. This is because a size of the lens and the size of the light source of the imaging apparatus are limited.

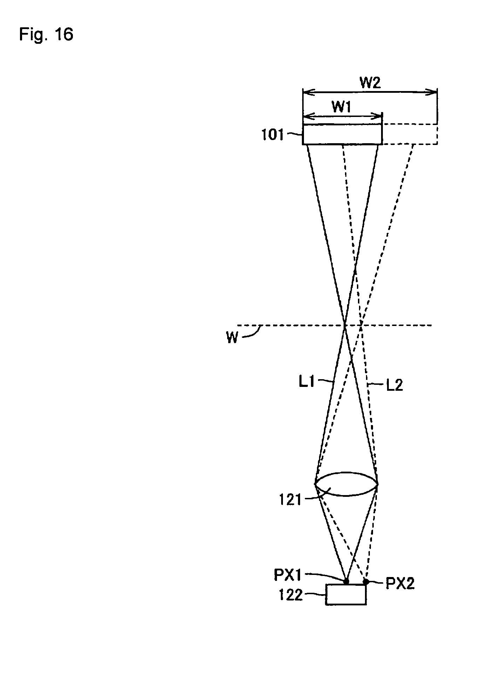

FIG.16 shows a view explaining the light received by the imaging apparatus when the inspected surface of the work is the flat surface.
In FIG.16, the light emitted from the light source 101 is focused on the work W, and is reflected by the work W. The light that reaches the lens 121 from the work W is collected by the lens 121 and reaches the imaging element 122. In FIG. 16, for the convenience of understanding, the light source 101 is provided on the opposite side of the imaging apparatus 2, with respect to the work W.

When a pixel PX1 that exists in the center of the imaging element 122 views the light source 101 through the lens 121, the size of a visual field in the light source 101 is a width W1 or less of the light source 101. Namely, the pixel PX1 can receive all irradiation lights L1 emitted from the light source 101.

Meanwhile, when a pixel PX2 that exists on the edge part of the imaging element 122 views the light source 101 through the lens 121, only a part of the light source 101 can be viewed. If the width of the light source 101 is W2, the pixel PX2 can receive all irradiation lights L2 emitted from the light source 101. However, actually, the pixel PX2 can only partially receive the light emitted from the light source 101.

An object of the present invention is to provide the defect inspection apparatus and a defect inspection method capable of improving the accuracy of the defect inspection on the edge part of the inspection area.

### SUMMARY OF THE INVENTION

The present invention is summarized as follows.
There is provided a defect inspection apparatus that irradiates light to an inspection object having a surface with gloss and inspects whether a defect is present or not on the surface of the inspection object based on reflection of the irradiated light. The defect inspection apparatus includes an imaging apparatus, a first light source, and a second light source. The imaging apparatus receives regular reflection of first irradiation light on the surface of the inspection object and images the surface of the inspection object to generate a first inspection image, and receives regular reflection of second irradiation light on the surface of the inspection object and images the surface of the inspection object to generate a second inspection image. The first light source emits the first irradiation light, so that the regular reflection on the surface of the inspection object is received by the imaging apparatus. The second light source emits the second irradiation light at an angle different from that of the first irradiation light, so that the regular reflection on the surface of the inspection object is received by the imaging apparatus. The first and second light sources emit the first and second irradiation lights, respectively, so that a first regular reflection area and a second regular reflection area are superposed one another, the first regular reflection area being a range on the surface of the inspection object where the imaging apparatus can receive regular reflection of the first irradiation light, and the second regular reflection area being a range on the surface of the inspection object where the imaging apparatus can receive regular reflection of the second irradiation light. The defect inspection apparatus further includes a main control part that acquires the first and second inspection images from the imaging apparatus, superposes the first and second inspection images one another, and determines whether a defect is present or not on the surface of the inspection object, the defect appearing as either convex or concave with respect to a periphery thereof.

Preferably, the first and second light sources emit the first and second irradiation lights from a predetermined area toward the surface of the inspection object, with a certain degree of incident angle. The imaging apparatus receives the regular reflection on the surface of the inspection object, in an opening area having a predetermined size.

"A predetermined area" means that the first and second light sources are not point light sources but ranges of a certain size for irradiating light. "With a certain degree of incident angle" includes a case that a diffuse light is emitted from an arbitrary place within the predetermined area and a case that a divergent light and a convergent light are emitted. It means the light having a spread in an irradiation angle. In addition, it includes the light that spreads after collecting the light once, excluding a parallel light. Thus, it is possible to expand the area on the surface capable of receiving the regular reflection light of the inspection object, namely the area that can be inspected. This is effective for expanding the inspection area even when the inspection object is the curved surface.

An area having a predetermined size means the opening area having a limited size. When the imaging element itself has the limited size, the size of the opening area becomes limited. Also, by imaging through a light receiving lens, the size of the opening area becomes limited. With the structure described above, the spread of the irradiation light or propagation of the irradiation light on the edge part of the opening area is shield, and therefore light sensitivity of the peripheral part of the first and second regular reflection areas is sometimes deteriorated compared to the center part. Whether the defect is present or not is determined for the peripheral part having low light receiving sensitivity, so that the first regular reflection area and the second regular reflection area are superposed one another and the first and second inspection images are superposed one another. Thus, a stable defect inspection is possible even in the area with low sensitivity.

Preferably, the main control part applies a binarization processing to each of the first and second inspection images, prior to superposing the first and second inspection images one another.

More preferably, the main control part applies a labeling processing to a plurality of pixels included in a composite image produced by superposing the first and second inspection images one another. When an area formed by a pixel with the same label out of the plurality of pixels in the composite image is greater than a predetermined value, the main control part determines that the defect is present in the area.

Preferably, the first and second irradiation lights are lights having mutually different characteristics. The main control part turns on the first and second light sources simultaneously. The imaging apparatus separates regular reflection of the light that has been received in accordance with a difference of the characteristics, and generates the first and second inspection images respectively corresponding to the first and second irradiation lights.

More preferably, the characteristic is a peak wavelength.
Preferably, the main control part turns on the first and second light sources sequentially.

According to another aspect of the present invention, there is provided a defect inspection method for irradiating light to an inspection object having a surface with gloss and inspecting whether a defect is present or not on the surface of the inspection object by receiving reflection of the irradiated light with an imaging apparatus. The defect inspection method includes the steps of: emitting first irradiation light with a first light source so that regular reflection of the fist irradiation light on the surface of the inspection object is received by the imaging apparatus, and emitting second irradiation light at an angle different from that of the first irradiation light with a second light source so that regular reflection of the second irradiation light on the surface of the inspection object is received by the imaging apparatus. In the step of emitting irradiation lights, the first and second irradiation lights are emitted, so that a first regular reflection area and a second regular reflection area are superposed one another, the first regular reflection area being a range on the surface of the inspection object where the imaging apparatus can receive regular reflection of the first irradiation light on the surface of the inspection object, and a second regular reflection area being a range on the surface of the inspection object where the imaging apparatus can receive regular reflection of the second irradiation light on the surface of the inspection object. The defect inspection method further includes the steps of: receiving the regular reflection of the first irradiation light on the surface of the inspection object and imaging the surface of the inspection object to generate a first inspection image; and receiving the regular reflection of the second irradiation light on the surface of the inspection object and imaging the surface of the inspection object to generate the second inspection image; and superposing the fist and second inspection images one another and determining whether a defect is present or not on the surface of the inspection object, the defect appearing as either convex or concave with respect to a periphery thereof.

Preferably, the first and second light sources emit the first and second irradiation lights from a predetermined area toward the surface of the inspection object, with a certain degree of incident angle. The imaging apparatus receives the regular reflection on the surface of the inspection object, in an opening area having a predetermined size.

"A predetermined area" means that the first and second light sources are not point light sources but ranges of a certain size for irradiating light. "With a certain degree of incident angle" includes a case that a diffuse light is emitted from an arbitrary place within the predetermined area and a case that a divergent light and a convergent light are emitted. It means the light having a spread in an irradiation angle. In addition, it includes the light that spreads after collecting the light once, excluding a parallel light. Thus, it is possible to expand the area on the surface capable of receiving the regular reflection light of the inspection object, namely the area that can be inspected. This is effective for expanding the inspection area even when the inspection object is the curved surface.

An area having a predetermined size means the opening area having a limited size. When the imaging element itself has the limited size, the size of the opening area becomes limited. Also, by imaging through a light receiving lens, the size of the opening area becomes limited. With the structure described above, the spread of the irradiation light or propagation of the irradiation light on the edge part of the opening area is shield, and therefore light sensitivity of the peripheral part of the first and second regular reflection areas is sometimes deteriorated compared to the center part. Whether the defect is present or not is determined for the peripheral part having low light receiving sensitivity, so that the first regular reflection area and the second regular reflection area are superposed one another and the first and second inspection images are superposed one another. Thus, a stable defect inspection is possible even in the area with low sensitivity.

Preferably, prior to the step of determining, the step of applying a binarizing processing to each of the first and second inspection images prior to the step of determining the presence/absence of the defect.

More preferably, in the step of determining the presence/absence of the defect, a labeling processing is applied to a plurality of pixels included in a composite image produced by superposing the first and second inspection images one another, and when an area formed by a pixel added with the same label out of the plurality of pixels in the composite image is greater than a predetermined value, it is determined that the defect is present in the area.

Preferably, the first and second irradiation lights are lights having mutually different characteristics. In the step of emitting irradiation lights, the first and second light sources are turned on simultaneously. In the step of generating the inspection images, regular reflection of the lights that has been received by the imaging apparatus is separated in accordance with a difference of the characteristics, and the first and second inspection images respectively corresponding to each of the first and second irradiation lights are generated.

More preferably, the characteristic is a peak wavelength.
Preferably, in the step of emitting the irradiation lights, the first and second light sources are turned on sequentially.

According to the present invention, a full range of the inspection area can be subjected to the defect inspection with accuracy.

### BRIEF DESCRIPTION OF THE DRAWINGS

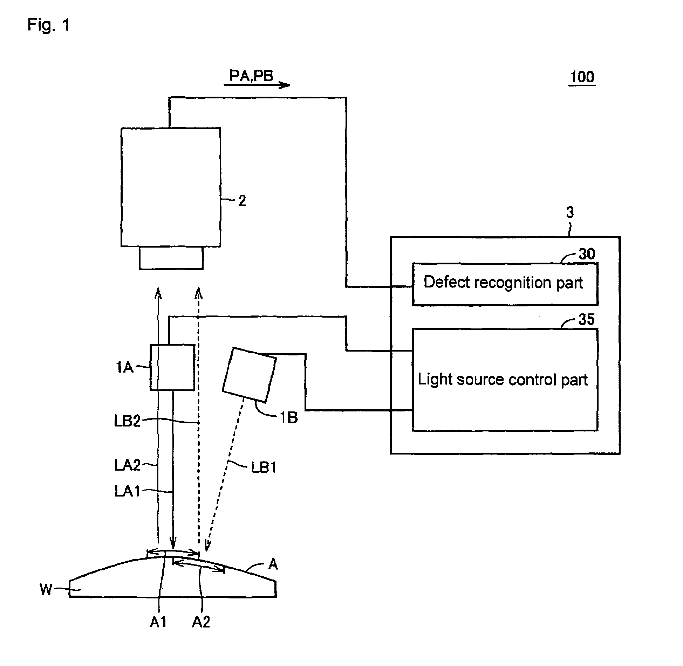

FIG. 1 shows a view showing a basic structure of a defect inspection apparatus of a first embodiment;

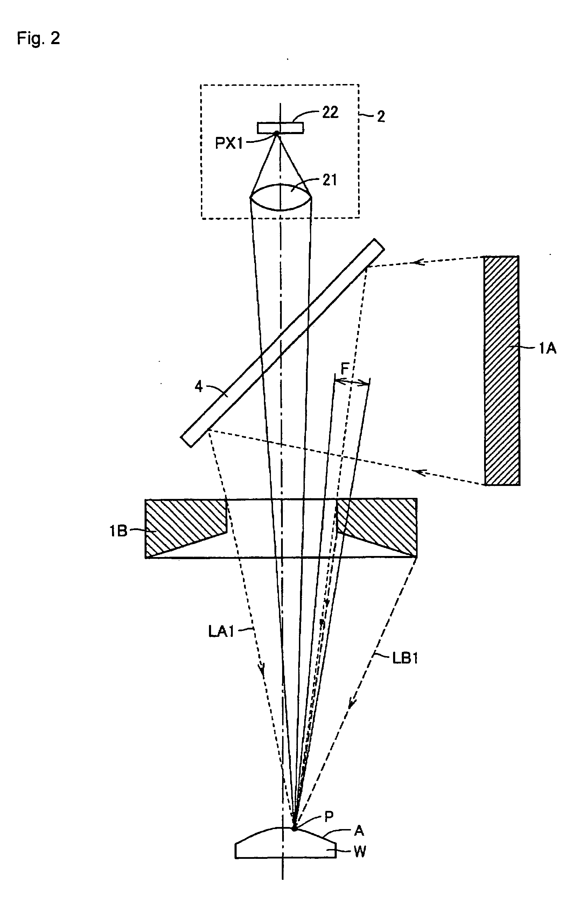

FIG. 2 shows a view further explaining an arrangement of light sources 1A and 1 B of FIG.1 in detail;

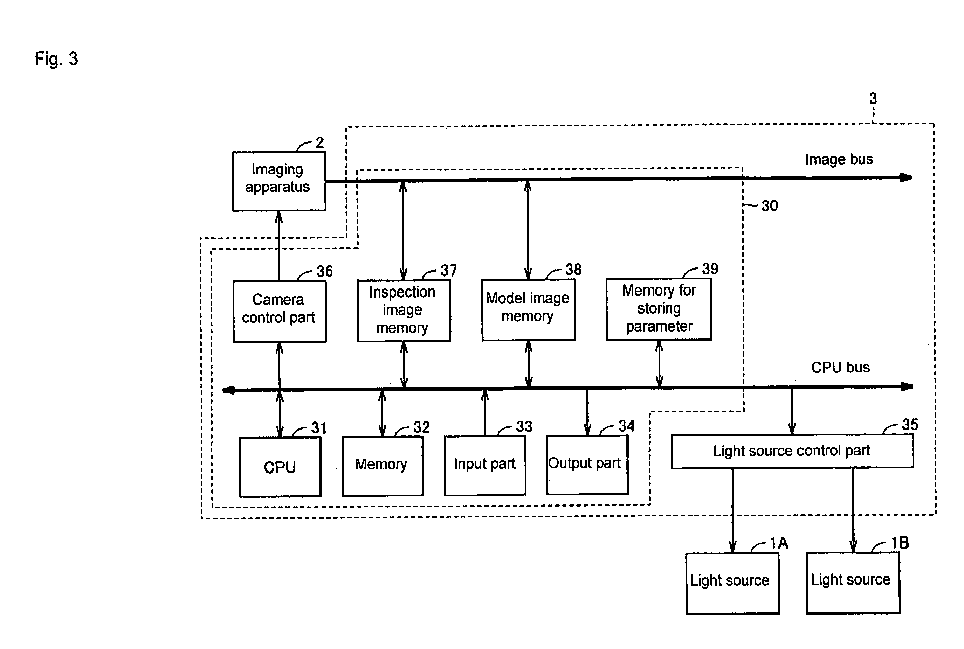

FIG. 3 shows a view further explaining in detail a structure of a main control part 3 of FIG.1;

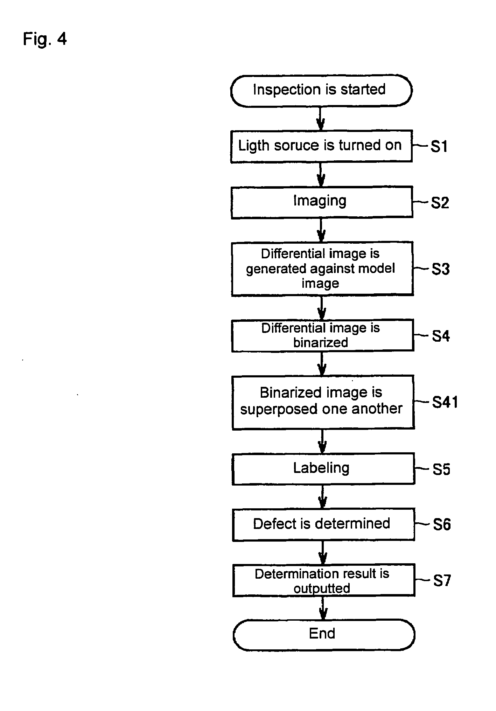

FIG. 4 shows a flowchart showing a flow of an inspection processing executed by the main control part 3 of FIG.2;

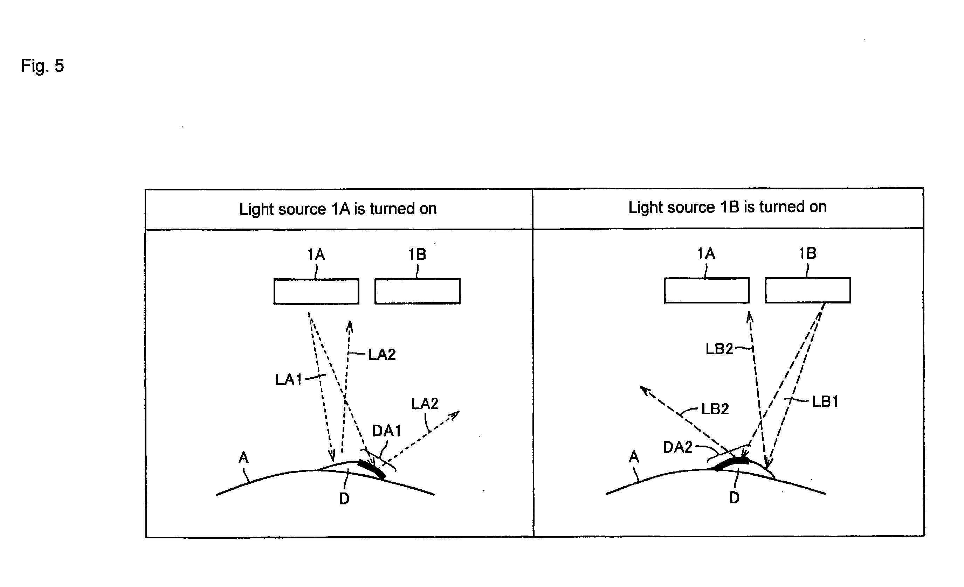

FIG.5 shows a first view explaining an advantage of the defect inspection apparatus of the embodiment 1;

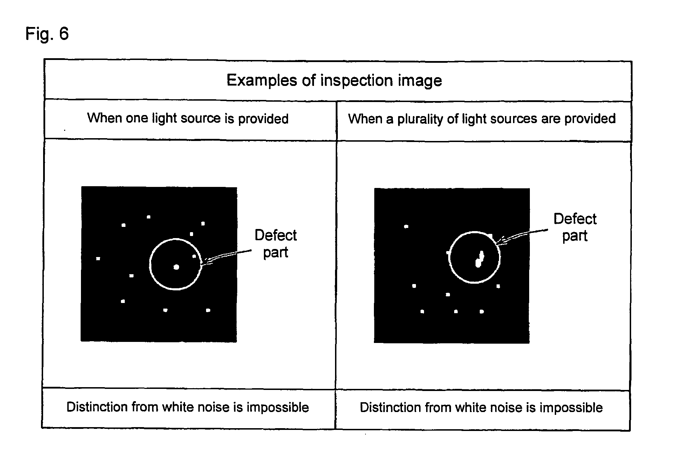

FIG.6 shows a second view explaining the advantage of the defect inspection apparatus of the embodiment 1;

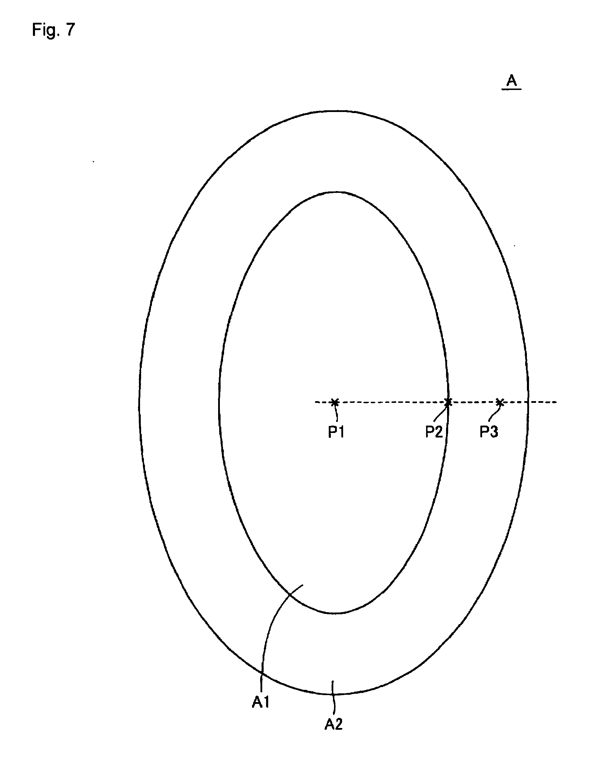

FIG.7 shows a view explaining an inspection area by the defect inspection apparatus of the embodiment 1;

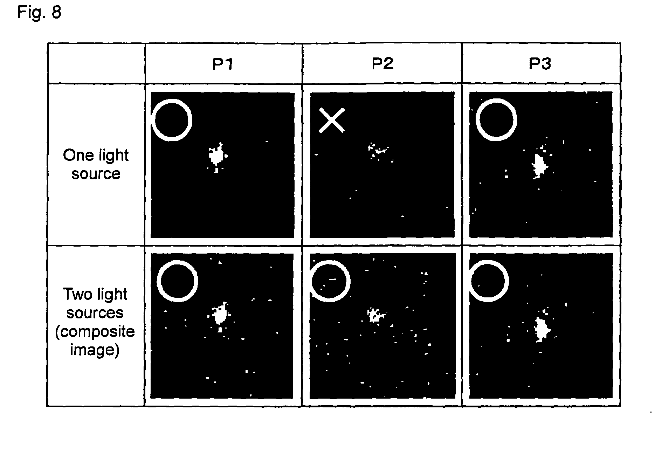

FIG.8 shows a view explaining a result of inspecting the inspection area shown in FIG.7 by the defect inspection apparatus of the embodiment 1;

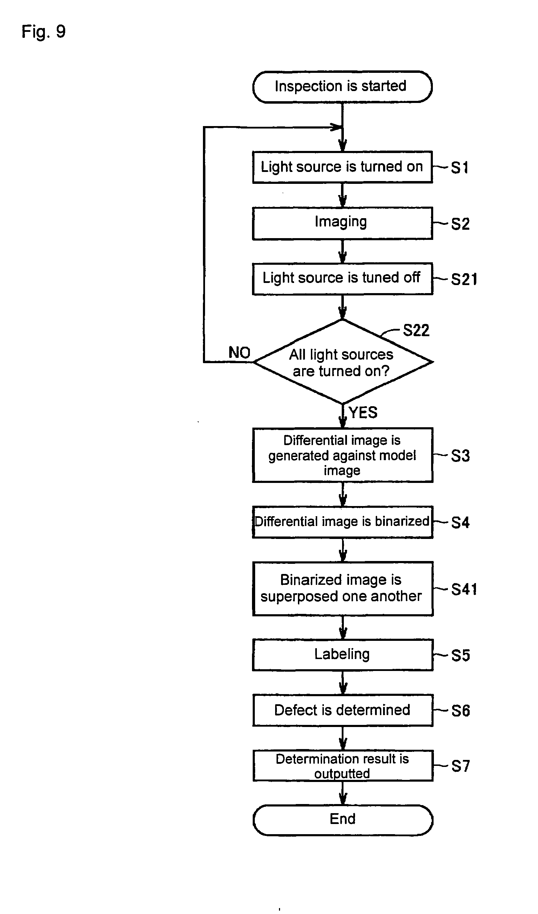

FIG.9 shows a flowchart showing the flow of inspection processing in the defect inspection apparatus of an embodiment 2;
FIG.10 shows a schematic view showing a structure of a conventional defect inspection apparatus;
FIG.11 shows a view schematically showing an inspection of irregularity defects by a main control part 113 of FIG.10;
FIG.12 shows a view explaining a problem generated in the inspection by the defect inspection apparatus 110 of FIG.10, when an inspected surface is a curved surface;
FIG.13 shows a view explaining a method of securing a wide inspection area when the inspected surface is the curved surface;
FIG.14 shows a view explaining the problem of an inspection method disclosed in Japanese Patent Application Laid Open No.11-23243;
FIG.15 shows a view explaining a defect detection on an edge part of an inspection area; and
FIG.16 shows a view explaining light received by an imaging apparatus when the inspected surface of a work is a flat surface.

### DETAILED DESCRIPTION OF THE PREFERRED EMBODIMENTS

Preferred embodiments of the present invention will be explained with reference to the drawings. Note that the same signs and numerals are assigned to the same or corresponding parts in the figure.

### (Embodiment 1)

FIG.1 shows a view showing a basic structure of a defect inspection apparatus of an embodiment 1.

In FIG.1, a defect inspection apparatus 100 inspects whether a defect is present on a glossy surface of a work W (inspection object). Note that the defect means an irregularity defect (defect in an appearance of a convex shape or a concave shape compared to a periphery).

The work W is a metal or a resin coated with a transparent material on its surface. Note that in FIG.1, the surface of the work W (inspected surface A) is a curved surface. However, the surface of the work W may be a flat surface.

The defect inspection apparatus 100 includes a plurality of light sources 1A, 1 B, an imaging apparatus 2, and a main control part 3.

The light source 1A emits irradiation light LA1 toward the inspected surface A. Therefore, an irradiation area A1 is formed on the inspected surface A. The irradiation light LA1 is regularly reflected on the inspected surface A. Thus, a regular reflection light LA2 is generated.

The light source 1 B emits irradiation light LB1 toward the inspected surface A. Therefore, an irradiation area A2 is formed on the inspected surface A. The irradiation area A2 is formed so as to be superposed on at least an edge part of the irradiation area A1. The irradiation light LB1 is regularly reflected on the inspected area A. Thus, the regular reflection light LB2 is generated. Note that the irradiation areas A1 and A2 are the inspection areas in the defect inspection apparatus 100.

Namely, the light source 1A emits the irradiation light LA1 so that the light regularly reflected on the inspected surface A (regular reflection light LA2) is received by the imaging apparatus 2. The light source 1 B emits the irradiation light LB1 so that the light regularly reflected by the inspected surface A (regular reflection light LB2) is received by the imaging apparatus 2. The light source 1 B emits the irradiation light LB1 at an angle different from that of the irradiation light LA1. Light sources 1A and 1 B emit the irradiation lights LA1 and LB1 respectively, so that a first regular reflection area (irradiation area A1), being a range where the imaging apparatus 2 can receive a light of the regular reflection light of the irradiation light LA1 on the inspected surface A, and a second regular reflection area (irradiation area A2) where the imaging apparatus 2 can receive the regular reflection light of the irradiation light LB2 on the inspected surface A, are superposed one another. Positions of the light sources 1A and 1 B are relatively defined.

The irradiation lights LA1 and LB1 are the lights having "different characteristics", and specifically the lights having different peak wavelengths (namely, having different colors). The regular reflection lights LA2 and LB2 are made incident on the imaging apparatus 2. For example, the light source 1A is the light source for emitting red color light, and the light source 1 B is the light source for emitting blue color light. For example, both of the light sources 1A and 1 B have a plurality of numbers of LEDs.

The imaging apparatus 2 collects the regular reflection lights LA2 and LB2, images the inspected surface A in accordance with the received regular reflection light LA2, thereby generating an inspection image PA, and imaging the inspected surface A in accordance with the received regular reflection light LAB, thereby generating an inspection image PB. The imaging apparatus 2 generates the inspection images PA and PB corresponding to each of the irradiation lights LA1 and LB1, in accordance with a difference of characteristics (namely, peak wavelength) of the regular reflection lights LA2 and LB2.

More specifically, the imaging apparatus 2 is a color image imaging apparatus (color camera). Generally, by providing the color camera, a color filter, and a prism, etc, color separation can be applied to incident light into blue color, red color, and green color. Thus, the imaging apparatus 2 can output an image of red color and an image of blue color.

The main control part 3 controls the light sources 1A and 1 B, so that the light sources 1A and 1 B are turned on simultaneously. Also, the main control part 3 receives two inspection images PA and PB from the imaging apparatus 2. The main control part 3 determines whether the defect is present on the inspected surface A by superposing the inspection images PA and PB one another.

The main control part 3 includes a light source control part 35 and a defect recognition part 30. The light source control part 35 controls a timing of turning-on and turning-off of the light sources 1A and 1 B, and adjusts a quantity of light of each light source. When there are a predetermined value or more of areas different from the periphery In the composite image obtained by superposing two inspection images received from the imaging apparatus 2, the defect recognition part 30 recognizes these areas to be the defect on the inspected surface A.

In this way, the light sources 1A and 1 B emit the irradiation lights LA1 and LB1 respectively, so that the edge parts of the inspection areas (irradiation areas) are superposed one another. The imaging apparatus 2 receives the regular reflection lights LA2 and LB2, and generates two images corresponding to each of the light sources 1A and 1 B. The main control part 3 combines the two images and determines whether the defect is present or not. By irradiating the inspected surface A with the irradiation lights LA1 and LB1 from mutually different directions, a position of the area showing the defect in each image is slightly deviated in each image. Therefore, even if the area showing the defect is small in each image, by superposing the two images one another, the area showing a defect part in the image after composition is made large. Thus, the accuracy of defect detection on the edge part of the inspection area can be improved.

Note that in FIG.1, the light sources 1A and 1 B are shown as a plurality of light sources. However, at least two light sources may only be provided in the defect inspection apparatus of the present invention.

Next, an arrangement of the light sources 1A and 1 B will be explained in detail.

FIG.2 shows a view explaining the arrangement of the light sources 1A and 1 B of FIG.1 in detail.
In FIG.2, the light source 1A is a plate type light source, and the light source 1 B is a ring type light source. In addition, the imaging apparatus 2 focuses the light on a certain point P on the inspected surface A. The light sources 1A and 1 B emit the irradiation lights LA1 and LB1 respectively from a light emission area having a limited size, with a certain degree of the incident angle. In addition, the imaging apparatus 21 receives the regular reflection light in the opening area (lens 21) having a predetermined size.

The light made incident on the lens 21 of the imaging apparatus 2 forms an image at the pixel PX1 on an imaging element 22. When the inspected surface A is viewed from an image forming point (the pixel PX1), all regular reflection lights emitted on the point P on the inspected surface A form the image on the pixel PX1, when an irradiation surface of the light source 1A and an irradiation surface of the light source 1 B are included in a visual field F of the pixel PX1 (when the irradiation lights LA1 and LB1 pass through the visual field F). Namely, by arranging the light sources 1A and 1 B so that both irradiation surfaces of the light sources 1A and 1 B are included in a "visual field at the image forming point (the pixel PX1)", both regular reflection lights of the light sources 1A and 1 B regularly reflected at the point P can be imaged by the pixel PX1.

The imaging apparatus 2 is disposed, with an optical axis directed upward of the work W in a vertical direction. A half mirror 4 is provided on the optical axis of the imaging apparatus 2. The light source 1A is provided on the side of the half mirror 4. The regular reflection light from the inspected surface A passes through the half mirror 4 and is made incident on the imaging apparatus 2.

FIG.3 shows a view explaining in detail the structure of the main control part 3 of FIG.1.
In FIG.3, the main control part 3 includes a CPU (Central Processing Unit) 31, a memory 32, an input part 33, an output part 34, a light source control part 35, a camera control part 36, an inspection image memory 37, a model image memory 38, and a memory 39 for storing parameters.

The CPU 31 controls an entire operation of the main control part 3. The memory 32 stores a program executed on the CPU 31. The input part 33 inputs a condition required for inspection and a parameter, etc, and is constituted by a keyboard and a mouse, etc. The output part 34 outputs an inspection result, and is constituted by an interface circuit for an external device and a monitoring device (not shown).

The light source control part 35 controls the turn-on and turn-off and the quantity of light of the light sources 1A and 1 B respectively, in accordance with an instruction from the CPU 31. The camera control part 36 controls the operation of the imaging apparatus 2, responding to the instruction from the CPU 31. Thus, the imaging apparatus 2 generates the inspection image.

The inspection image memory 37 stores image data of the inspected surface imaged by each light source. The model image memory 38 stores a model image generated when a non-defective work is imaged prior to the inspection. Note that the inspection image and the model image sent from the imaging apparatus 2 are stored in the inspection image memory 37 and the model image memory 38, respectively through an image bus.

The memory 39 for storing parameters stores each kind of parameter required for the inspection. Each kind of parameter is, for example, a binarized threshold value for binarizing a calculated differential image as will be described later, a threshold value for determination for determining whether the defect is present, and an adjustment value for the quantity of light of the light sources 1A and 1 B. Note that the values of these parameters are specified prior to the inspection.

Here, the CPU (Central Processing Unit) 31, the memory 32, the input part 33, the output part 34, the camera control part 36, the inspection image memory 37, the model image memory 38, and the memory 39 for storing parameters are included in the defect recognition part 30 of FIG.1. In addition, these blocks included in the main control part 3 mutually exchange data through a CPU bus.

FIG.4 shows a flowchart of a flow of inspection processing executed by the main control part 3 of FIG.2.
In FIG.4 and FIG.3, when the processing is started, first, in step S1, the CPU 31 and the light source control part 35 adjust the quantity of light based on the condition (parameter) stored in the memory 39 for storing parameters, and turns on the light sources 1A and 1 B simultaneously.

Next, in step S2, the CPU 31 and the camera control part 36 controls the imaging apparatus 2. Thus, the imaging apparatus 2 performs imaging and outputs the inspection image corresponding to each light source. The inspection image is stored in the inspection image memory 37.

Next, in step S3, the CPU 31 reads the model image from the model image memory 38, and generates the differential image between the inspection image stored in the inspection image memory 37 and the model image.

The CPU 31 obtains the difference of density values of pixels in a state of a corresponding relation, between the inspection image obtained by irradiating the inspected surface with the light from the light source 1A, and the model image corresponding to the inspection image. By using the value of the difference of density, the image data showing a degree of a difference of lightness between the inspection image and the model image is generated. Note that the differential image is generated corresponding to each light source.

In step S4, the CPU 31 generates a binarized image from the differential image by using a predetermined binarized threshold value. This processing is performed for each of a plurality of differential images.

In step S41, the CPU 31 generates the composite image by superposing a plurality of binarized images.

In step S5, the CPU 31 applies a labeling processing to the composite image. Here, the labeling processing is the processing of classifying a plurality of areas as a group by adding the same label to the pixels connected to each other, and is used widely in an image processing.

The labeling processing includes various kinds of methods. However, in the labeling processing by four vicinities, being a typical method, first, the pixel not added with a label on the image is found and a new label is added to this pixel. Next, the same label is added to the pixel connected to the pixel added with a new label in four directions of ±x directions and ±y directions. Then, the same label is added to the pixel connected to the pixel added with the same label in the four directions. As long as there are pixels to be added with labels in the image, this operation is repeated.

Note that instead of the connected pixels, the processing of adding the same label may be applied to the pixel located within a certain range separate from the connected pixel by prescribed numbers of pixels.

In this embodiment, by this labeling processing, the area allowing the difference of lightness to occur between the inspection image and the model image (area formed by the pixel added with the same label out of a plurality of pixels) is specified.

In step S6, the CPU 31 measures a dimension of the area, for each area formed by a plurality of pixels added with the same label. Then, when the dimension of the area thus measured has a size of predetermined value or more, the CPU 31 determines this area to have the irregularity defect. Then, based on this recognition result, the CPU 31 performs a final determination of the presence/absence of the defect. This processing is performed to each of a plurality of binarized images.

In step S7, the CPU 31 outputs the aforementioned determination result to the output part 34. When the CPU 31 outputs the determination result, the processing of an entire body is finished.

FIG.5 shows a first view explaining an advantage of the defect inspection apparatus of the embodiment 1.
In FIG.5, a defect D is assumed to be provided on the edge part of the inspection area. When the light sources 1A and 1 B are irradiated with the irradiation lights LA1 and LB1 directed to the defect D, the incident angles of the irradiation lights LA1 and LB1 to the defect D are different from each other. Therefore, a part where the regular reflection light is not imaged in the defect D (a part determined to be defect by the main control part 3 of FIG.1) becomes a defect part DA1 when the defect D is irradiated with the light from the light source 1A, and becomes a defect part DA2 when the defect D is irradiated with the light from the light source 1 B.

In this way, the position of the defect reflected on the inspection image is deviated between the case that the light source 1A is turned on and the case that the light source 1 B is turned on. Therefore, in the composite image obtained by superposing two inspection images corresponding to the light sources 1A and 1 B respectively, the area of the defect part becomes large.

FIG.6 shows a second view explaining the advantage of the defect inspection apparatus of the embodiment 1.
In FIG.6, the area of the defect part is smaller in the inspection image when the light source is one, and therefore distinction between the defect part and a white noise is impossible. Meanwhile, when there are a plurality of light sources, by combining a plurality of inspection images, the area of the defect part becomes large, and therefore the distinction between the defect part and the white noise is facilitated. Therefore, the defect can also be detected even on the edge part of the inspection area.

FIG.7 shows a view explaining the inspection area by the defect inspection apparatus of the embodiment 1.
In FIG.7, the irradiation areas A1 and A2 on the inspected surface A correspond to the irradiation areas A1 and A2 of FIG.1, respectively. The irradiation area A2 is formed so as to include the irradiation area A1. Namely, at least the edge part of the irradiation area A1 is superposed on the irradiation area A2.

Positions P1 to P3 are the positions of defects present in the irradiation areas A1 and A2. The position P2 shows a boundary part of the irradiation area A1.

FIG.8 shows a view explaining a result of inspecting the inspection area as shown in FIG.7 by the defect inspection apparatus of the embodiment 1.

In FIG.8, the inspection image obtained in a case of one light source, and the composite image obtained in a case of two light sources are shown so as to be corresponded to the positions P1 to P3. Note that in order to show whether or not the main control part 3 can detect the defect, a mark of either one of "o" (detection is possible) and "x" (detection is impossible) is given on an upper left of the image.

When the boundary part (position P2) of the irradiation area A1 is imaged by using only one of the light sources 1A and 1 B, the area of the defect part in the inspection image is small, and therefore the defect can not be detected. Meanwhile, when the vicinity of the position P2 is imaged by using both of the light sources 1A and 1 B of FIG.1, the area showing the defect part becomes large in the inspection image, and therefore the defect can be detected. In addition, at the positions P1 and P3, the defect can be detected by only a single light source at the positions P1 and P3.

Note that in the explanation as described above, "the light having a different peak wavelength (namely, color)" is shown as the "irradiation light having different characteristics". However, in the present invention, the "irradiation light having different characteristics" is not limited to the light as described above, and for example, the light having different direction of polarization, phase and strength, etc may be the irradiation light.

As described above, according to the embodiment 1, by performing the defect inspection by superposing the inspection images one another corresponding to each of the plurality of light sources, the detection accuracy of the defect on the edge part of the inspection area (irradiation area) can be improved.

### (Embodiment 2)

An entire body of the defect inspection apparatus of the embodiment 2 is the same as the structure of the defect inspection apparatus 100 as shown in FIG.1. Therefore, the explanation thereafter is not repeated for the structure of the defect inspection apparatus of the embodiment 2. In addition, the block diagram of the main control part provided in the defect inspection apparatus of the embodiment 2 is the same as the block diagram as shown in FIG.3. Therefore, the explanation thereafter is not repeated.

The defect inspection apparatus of the embodiment 2 is different from the embodiment 1, in the point of having the same peak wavelengths of the irradiation lights LA1 and LB1 in FIG.1 (namely, having the same the characteristics). In addition, the main control part 3 turns on the light sources 1A and 1 B sequentially. In these points, the defect inspection apparatus of the embodiment 2 is different from the defect inspection apparatus of the embodiment 1.

When the irradiation lights LA1 and LB1 have the same peak wavelengths, the light sources 1A and 1 B can not be turned on simultaneously. This is because when the light sources 1A and 1 B are turned on simultaneously, it means that the area of the light source is widened. This is because, as shown in FIG.13, when the area of the light source becomes large, the noise light is made incident on the imaging apparatus 2, thus deteriorating the accuracy of defect detection. Therefore, in the embodiment 2, the light sources 1A and 1 B are turned on sequentially.

FIG.9 shows a flowchart of the flow of the inspection processing in the defect inspection apparatus of the embodiment 2.
In FIG.9 and FIG.4, the flowchart of FIG.9 is different from the flowchart shown in FIG.4, in the point that steps S21 and S22 are added after step S2. The processing in other step in the flowchart of FIG.9 is the same as the processing of the corresponding step in the flowchart of FIG. 4. Therefore, the processing of steps S21 and S22 are explained, and the explanation of the processing of other step is not repeated.

Next, in FIG.9 and FIG.3, the flowchart of FIG.9 will be explained. In step S1, first, the light source 1A is turned on. Then, in step S21, the CPU 31 turns off the light source 1A. Next, in step S22, the CPU 31 determines whether or not all light sources 1A and 1 B are turned on. When all the light sources 1A and 1 B are turned on (YES in step S22), the processing is progressed to step S3. Meanwhile, when the light source 1 B is not turned on yet (NO in step S22), the processing is returned to step S1 again. The CPU 31 repeats the processing of steps S1 to S21 until the light sources 1A and 1 B are turned on. Thus, the light sources 1A and 1 B are turned on sequentially. Note that an order of turning on the light sources 1A and 1 B may be reversed.

By executing the inspection processing according to the flow as shown in FIG.9, in a case of the composite image in which the two inspection images are superposed one another, the area of the defect part becomes large. Therefore, according to the embodiment 2, in the same way as the embodiment 1, the detection accuracy of the defect on the edge part of the inspection area can be improved.

In addition, according to the embodiment 2, the wavelength of the irradiation light is not required to be changed for each light source. Therefore, in the embodiment 2, instead of the color camera, a black and white camera can be used in the imaging apparatus, and therefore a free degree of the structure of the defect inspection apparatus can be enhanced.

It should be noted that all of the embodiments disclosed this time are exemplified and not limited. The scope of the present invention is shown not by the above-described explanation but by the scope of claims, and all modifications are included in the scope not departing from the scope of the claims and in the equivalent meaning.

## Claims

1. A defect inspection apparatus that irradiates light to an inspection object having a surface with gloss and inspects whether a defect is present or not on the surface of the inspection object based on reflection of the irradiated light, the apparatus comprising:
an imaging apparatus that receives regular reflection of first irradiation light on the surface of the inspection object and images the surface of the inspection object to generate a first inspection image, and receives regular reflection of second irradiation light on the surface of the inspection object and images the surface of the inspection object to generate a second inspection image;
a first light source that emits the first irradiation light, so that the regular reflection on the surface of the inspection object is received by the imaging apparatus; and
a second light source that emits the second irradiation light at an angle different from that of the first irradiation light, so that the regular reflection on the surface of the inspection object is received by the imaging apparatus,
wherein the first and second light sources emit the first and second irradiation lights, respectively, so that a first regular reflection area and a second regular reflection area are superposed one another, the first regular reflection area being a range on the surface of the inspection object where the imaging apparatus can receive regular reflection of the first irradiation light, and the second regular reflection area being a range on the surface of the inspection object where the imaging apparatus can receive regular reflection of the second irradiation light, and
the defect inspection apparatus further comprises:
a main control part that acquires the first and second inspection images from the imaging apparatus, superposes the first and second inspection images one another, and determines whether a defect is present or not on the surface of the inspection object, the defect appearing as either convex or concave with respect to a periphery thereof.

2. The defect inspection apparatus according to claim 1, wherein
the first and second light sources emit the first and second irradiation lights from a predetermined area toward the surface of the inspection object, with a certain degree of incident angle, and
the imaging apparatus receives the regular reflection on the surface of the inspection object, in an opening area having a predetermined size.

3. The defect inspection apparatus according to claim 1, wherein the main control part applies a binarization processing to each of the first and second inspection images, prior to superposing the first and second inspection images one another.

4. The defect inspection apparatus according to claim 3, wherein the main control part applies a labeling processing to a plurality of pixels included in a composite image produced by superposing the first and second inspection images one another, and when an area formed by a pixel with the same label out of the plurality of pixels in the composite image is greater than a predetermined value, it is determined that the defect is present in the area.

5. The defect inspection apparatus according to claim 1, wherein
the first and second irradiation lights are lights having mutually different characteristics,
the main control part turns on the first and second light sources simultaneously, and
the imaging apparatus separates regular reflection of the light that has been received in accordance with a difference of the characteristics, and generates the first and second inspection images respectively corresponding to the first and second irradiation lights.

6. The defect inspection apparatus according to claim 5, wherein the characteristic is.a peak wavelength.

7. The defect inspection apparatus according to claim 1, wherein the main control part turns on the first and second light sources sequentially.

8. A defect inspection method for irradiating light to an inspection object having a surface with gloss and inspecting whether a defect is present or not on the surface of the inspection object by receiving reflection of the irradiated light with an imaging apparatus, the method comprising the steps of:
emitting first irradiation light with a first light source so that regular reflection of the fist irradiation light on the surface of the inspection object is received by the imaging apparatus, and emitting second irradiation light at an angle different from that of the first irradiation light with a second light source so that regular reflection of the second irradiation light on the surface of the inspection object is received by the imaging apparatus,
wherein in the step of emitting irradiation lights, the first and second irradiation lights are emitted, so that a first regular reflection area and a second regular reflection area are superposed one another, the first regular reflection area being a range on the surface of the inspection object where the imaging apparatus can receive regular reflection of the first irradiation light on the surface of the inspection object, and a second regular reflection area being a range on the surface of the inspection object where the imaging apparatus can receive regular reflection of the second irradiation light on the surface of the inspection object, and
the defect inspection method further comprises the steps of:
receiving the regular reflection of the first irradiation light on the surface of the inspection object and imaging the surface of the inspection object to generate a first inspection image; and receiving the regular reflection of the second irradiation light on the surface of the inspection object and imaging the surface of the inspection object to generate the second inspection image; and
superposing the fist and second inspection images one another and determining whether a defect is present or not on the surface of the inspection object, the defect appearing as either convex or concave with respect to a periphery thereof.

9. The defect inspection method according to claim 8, wherein
the first and second light sources emit the first and second irradiation lights from a predetermined area toward the surface of the inspection object, with a certain degree of incident angle, and
the imaging apparatus receives the regular reflection on the surface of the inspection object, in an opening area having a predetermined size.

10. The defect inspection method according to claim 8, further comprising the step of applying a binarizing processing to each of the first and second inspection images prior to the step of determining the presence/absence of the defect.

11. The defect inspection method according to claim 10, wherein in the step of determining the presence/absence of the defect, a labeling processing is applied to a plurality of pixels included in a composite image produced by superposing the first and second inspection images one another, and when an area formed by a pixel added with the same label out of the plurality of pixels in the composite image is greater than a predetermined value, it is determined that the defect is present in the area.

12. The defect inspection method according to claim 8, wherein
the first and second irradiation lights are lights having mutually different characteristics,
in the step of emitting irradiation lights, the first and second light sources are turned on simultaneously, and
in the step of generating the inspection images, regular reflection of the lights that has been received by the imaging apparatus is separated in accordance with a difference of the characteristics, and the first and second inspection images respectively corresponding to each of the first and second irradiation lights are generated.

13. The defect inspection method according to claim 12, wherein the characteristic is a peak wavelength.

14. The defect inspection method according to claim 8, wherein in the step of emitting the irradiation lights, the first and second light sources are turned on sequentially.
